Europäisches Patentamt

European Patent Office

Office européen des brevets

(11) Veröffentlichungsnummer: **0 233 525**
**B1**

# EUROPÄISCHE PATENTSCHRIFT

(45) Veröffentlichungstag der Patentschrift:
18.10.89

(51) Int. Cl.⁴: **F16B 7/04**

(21) Anmeldenummer: 87101286.0

(22) Anmeldetag: 30.01.87

(54) Vorrichtung zum lösbaren Verbinden zweier Profilstäbe.

(30) Priorität: 17.02.86 DE 3604989

(43) Veröffentlichungstag der Anmeldung:
26.08.87 Patentblatt 87/35

(45) Bekanntmachung des Hinweises auf die Patenterteilung:
18.10.89 Patentblatt 89/42

(84) Benannte Vertragsstaaten:
AT BE CH DE ES FR GB LI NL SE

(56) Entgegenhaltungen:
AT-B- 339 096
DE-A- 2 419 092
FR-A- 2 399 566
US-A- 4 190 375

(73) Patentinhaber: RK, Rose + Krieger GmbH & Co.
Kommanditgesellschaft Verbindungs- und
Positioniersysteme, Flurweg 1, D-4952 Porta
Westfalica(DE)

(72) Erfinder: Krieger, Harald, Sonneneck 11,
D-4950 Minden(DE)
Erfinder: Ziegler, Gerd, Werdenerstrasse 41,
D-4300 Essen 18(DE)

(74) Vertreter: Stracke, Alexander, Dipl.-Ing. et al,
Jöllenbecker Strasse 164, D-4800 Bielefeld 1(DE)

## Beschreibung

Die vorliegende Erfindung betrifft eine lösbare Verbindung entsprechend dem Gattungsbegriff des Anspruchs 1.

Eine derartige Verbindung ist beispielsweise aus der AT-B 339 096 bekannt.

Um das Arretierteil am zweiten Profilstab festklemmen zu können, ist dort eine Spannschraube vorgesehen, die in montiertem Zustand von dem ersten Profilstab abgedeckt ist und somit nicht mehr frei zugänglich ist.

Der erste, vertikal auf dem zweiten stehende Profilstab ist dabei durch Schrauben mit dem Arretierteil fest verbunden, so daß zum Lösen der gesamten Verbindung zunächst diese Schrauben gelöst werden müßten, um das vertikale Profilrohr abziehen und die Spannschraube betätigen zu können.

Neben der notwendigen Bearbeitung der vertikalen ersten Profilstabes durch das Einbringen von Durchgangslöchern zur Verschraubung mit dem Arretierteil, ist die Weiterverwendung dieses Profilstabes zu einem anderen Zweck eingeschränkt, da die eingebrachten Durchgangslöcher als störend empfunden werden.

Darüber hinaus ist die Montage bzw. Demontage der Profilstäbe mittels der bekannten Verbindung relativ zeitaufwendig, so daß sich eine ungünstige Kostenstruktur ergibt, die sich insbesondere dann als nachteilig auswirkt, wenn die Profilstäbe beispielsweise im Messeregalbau eingesetzt werden.

Aus der DE-U 1 919 678 ist eine Verbindung bekannt, bei der das Verankerungsteil in einer Ausnehmung des Profilstabes einliegt, während der mit dem Verankerungsteil verbundene Nutstein in einer Längsnut des anderen Profilstabes geführt ist. Durch Drehen einer das Verankerungsteil und den Nutstein verbindenden Schraube werden die beiden Profilstäbe gegeneinander gepreßt. Zwar erfüllt diese Verbindung die Forderung flächenbündig mit den Profilstäben abzuschließen, jedoch nur um den Preis einer aufwendigen Bearbeitung, da zur Herstellung der die Verankerungsteile aufnehmenden Ausnehmungen in den entsprechenden Profilstab diverse Arbeitsschritte vorgenommen werden müssen. Erschwerend kommt hinzu, daß, um eine gleichmäßige Verspannung der Profilstäbe zu erzielen, zwei sich gegenüberliegende Außenflächen des Profilstabes mit Ausnehmungen versehen werden müssen. Darüber hinaus ist die Wiederverwendung eines derartig bearbeiteten Profilstabes nicht in jedem Fall möglich, da hinsichtlich einer neueren Verwendung das Vorhandensein der Ausnehmungen berücksichtigt werden muß.

Obwohl bei dieser keine störenden aufliegenden Teile vorhanden sind, genügt ihre konstruktiv bedingte Sichtbarkeit nicht immer den optischen Ansprüchen, die an Verbindungen gestellt werden.

Der vorliegenden Erfindung liegt daher die Aufgabe zugrunde eine lösbare Verbindung der gattungsgemäßen Art so zu gestalten, daß deren Montage bzw. Demontage vereinfacht wird, eine Bearbeitung der Profilstäbe nicht mehr erforderlich ist und eine uneingeschränkte Wiederverwendbarkeit der Profilstäbe möglich ist.

Diese Aufgabe wird durch die im Kennzeichen des Anspruchs 1 aufgeführten Merkmale gelöst.

Durch die erfindungsgemäße Ausgestaltung einer lösbaren Verbindung ist es nunmehr möglich, diese an Ort und Stelle vorzunehmen, ohne vorher Bearbeitungen der Profilstäbe vornehmen zu müssen. Dies bedeutet nicht nur hinsichtlich der Fertigung eine wesentliche Kosteneinsparung, sondern bietet auch die Möglichkeit, sich montagemäßig verändernden Gegebenheiten ohne planerischen Aufwand anpassen zu können. Insbesondere dann, wenn mit den Profilstäben hergestellte Gestelle, Rahmen, Regale od. dgl. häufig montiert und demontiert werden müssen, bietet die erfindungsgemäße Verbindung einen erheblichen Vorteil gegenüber bekannten Systemen, da sie praktisch nur durch einfaches Handwerkzeug in Funktionslage bzw. aus dieser heraus gebracht werden kann und ohne Rücksicht auf irgendwelche baulichen Voraussetzungen jeder Zeit an jedem beliebigen gattungsgemäßen Profilstab einsetzbar ist.

Aber nicht nur der universelle Einsatz und die einfache Handhabung bietet erhebliche Vorteile gegenüber den bekannten Systemen, sondern auch die so geschaffene Möglichkeit, die Verschraubungen von außen nahezu unsichtbar erscheinen zu lassen.

Gerade dem Wunsch vieler Verwender solcher Profilstäbe, aus optischen Gründen die Verbindungsart so unauffällig wie möglich zu gestalten, kommt die erfindungsgemäße Konstruktion in optimaler Weise nach.

Vorteilhafte Ausgestaltungen der Erfindung sind in den Unteransprüchen gekennzeichnet.

Ein Ausführungsbeispiel der Erfindung wird nachfolgend anhand beigefügter Zeichnungen beschrieben.

Es zeigen:

Fig. 1 zwei rechtwinklig zueinander stehende Profilstäbe mit erfindungsgemäßen Verbindungsteilen in Explosivdarstellung,

Fig. 2 einen Teilquerschnitt durch den Verbindungsbereich der montierten Profilstäbe.

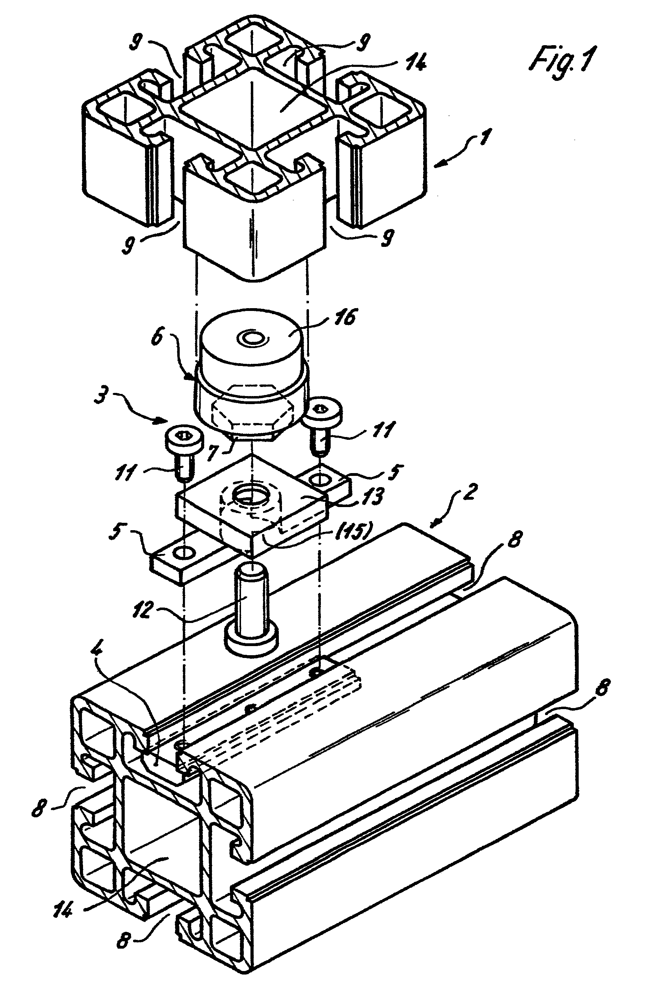

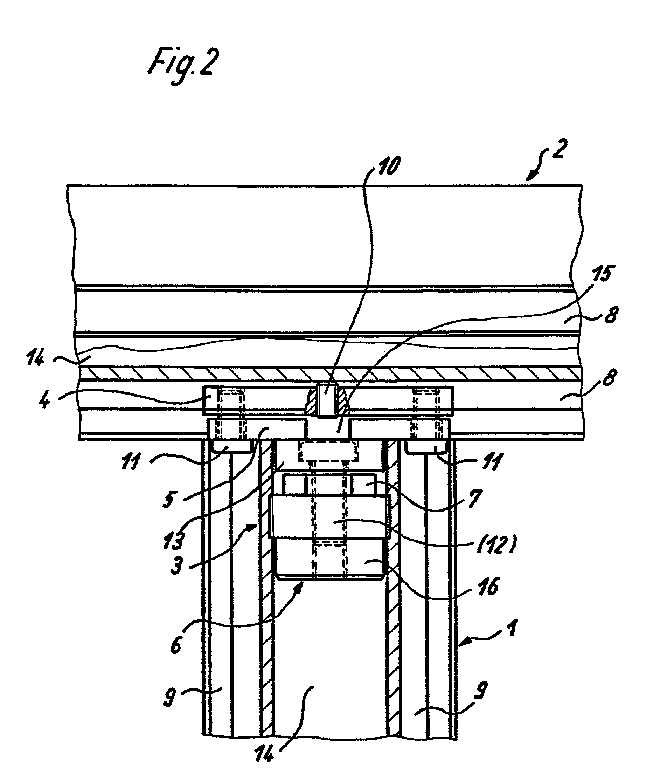

In den Figuren 1 und 2 sind zwei Profilstäbe 1, 2 dargestellt, die einen symmetrischen, quadratischen Querschnitt aufweisen. Auf jeder Außenfläche jedes Profilstabes 1, 2 verläuft eine im Bereich der Mittelachse angeordnete hinterschnittene Längsnut 8, 9. Im Innern der zwei gleich ausgebildeten Profilstäbe 1, 2 ist jeweils eine in Längsrichtung verlaufende und im Querschnitt ebenfalls quadratische Innenkammer 14 vorgesehen. Wie insbesondere die Figur 2 deutlich zeigt, liegt ein erster Profilstab 1 vertikal an einer Längsseite des zweiten Profilstabes 2 vollflächig an. In der Innenkammer 14 des ersten Profilstabes 1 ist ein Arretierteil 3 festgesetzt, das mit einem Nutstein 4 verbunden ist, der wiederum die Längsnut 8 des zweiten Profilstabes 2 hintergreift. Das Arretierteil 3 weist ein Zentrierstück 13 auf, das im vorliegenden Ausführungsbeispiel in seiner Grundfläche der Querschnittskontur und in etwa den Abmaßen der Innenkammer 14 entspricht. Dabei schließt die dem zweiten Profilstab 2 zugewandte Außenfläche des Zentrierstückes 13 mit der entsprechenden Stirnseite des ersten Profilstabes flächenbündig ab. An dieser Außenfläche des Zentrierstückes 13 ist ein Flansch 5 angeordnet, der in Gebrauchsstellung in der Längsnut 8 des zweiten Profilstabes 2 so einliegt, daß seine dem Zentrierstück 13 zugewandte Seite flacheben mit der zugeordneten Außenfläche des zweiten Profilstabes 2 verläuft, wobei er sich gleichzeitig mit dieser Außenfläche an der Stirnseite des ersten Profilstabes 1 abstützt.

In seinen Endbereichen ist der Flansch 5, der etwa im Mittenbereich eine Ausnehmung 15 aufweist, mit dem Nutstein 4 verschraubt.

Der Nutstein 4 ist in seiner Mitte mit einer Madenschraube 10 versehen, mit deren Hilfe eine Vorarretierung des Nutsteines 4 möglich ist, so daß ein Verrutschen während der Montage verhindert wird.

Im vorliegenden Ausführungsbeispiel entspricht sowohl der Nutstein 4 als auch der Flansch 5 in seiner Länge in etwa der Stirnkantenlänge des ersten Profilstabes 1, so daß insbesondere der Flansch 5 nicht seitlich über den Profilstab 1 hinausragt. Die Schrauben 11 liegen im inneren Bereich der Längsnuten 9 und sind daher von außen zum Verschrauben mit dem Nutstein 4 frei zugänglich. Um die Einfachheit der Montage zu verdeutlichen, wird im folgenden ein Montageablauf kurz beschrieben.

Mit Hilfe eines Werkzeuges, beispielsweise eines Steckschlüssels, der auf einen an eine selbstschneidene Mutter 6 angeformten Sechskant 7 aufgesetzt wird, kann diese selbstschneidende Mutter 6 in die Innenkammer 14 des ersten Profilstabes 1 so eingeschraubt werden, daß sie gegen ein axiales Verschieben gesichert ist. Eine Einführungshilfe bildet dabei ein dem Sechskant 7 abgewandter angeformter Zentrieransatz 16.

Das Zentrierstück 13 mit dem daran angeordneten Flansch 5 wird nun ebenfalls in die Innenkammer 14 eingeführt und mit Hilfe einer Schraube 12 mit der Mutter 6 verbunden.

Dabei ist durch das Zentrierstück 13 eine Verdrehsicherung gegeben, die verhindert, daß sich das Zentrierstück 13 und der Flansch 5 während des Anschraubens bzw. der Montage aus ihrer Lage verdreht.

Neben der in dem dargestellten Ausführungsbeispiel gezeigten Möglichkeit, das Arretierteil 3 mittels einer selbstschneidenden Mutter 6 gegen ein axiales Verschieben zu sichern, besteht auch die Möglichkeit, ein an sich bekanntes Klemmteil, das mit Spreizkeilen ausgestattet ist einzusetzen. Dabei kann einmal das Zentrierstück fest mit dem Klemmteil verbunden sein, andererseits ist es auch möglich, dieses mit Hilfe der Spreizschraube zu arretieren.

Bei der Verwendung eines derartigen Klemmteiles sollte allerdings berücksichtigt werden, daß dessen Zugbelastung erheblich geringer ist als die einer eingeschraubten selbstschneidenden Mutter.

Nachdem nun das Zentrierstück 13 in dem ersten Profilstab 1 festgelegt ist, wird der Flansch 5 mit dem Nutstein 4 mit Hilfe der Schrauben 11 verbunden.

Dabei wird wie schon erwähnt der Nutstein 4 gegen ein Verrutschen in der Längsnut 8 durch eine Madenschraube 10 unter einer gewissen Vorspannung gehalten. Diese Vorspannung kann jedoch auch erzielt werden, wenn statt einer Madenschraube 10 eine druckfederbelastete Kugel in dem Nutstein angeordnet wird. die sich an dem Nutboden abstützt und den Nutstein 4 unter Vorspannung an die Hinterschneidungsfläche anpreßt.

Wenn, wie in der vorgegangenen Beschreibung erwähnt, der erste Profilstab 1 vertikal an dem zweiten Profilstab 2 anliegt, so ist diese Lage nicht räumlich eingegrenzt als ausschließlich Lotrechte zu verstehen, sondern kann eine beliebige Raumlage einnehmen, bei der die beiden Profilstäbe 1, 2 im rechten Winkel zueinander stehen.

**Patentansprüche**

1. Lösbare Verbindung zweier im Querschnitt eckiger Profilstäbe (1, 2), vorzugsweise aus Leichtmetall, von denen ein erster (1) mit einer Stirnseite vertikal an einer Längsseite des zweiten Profilstabes (2) vollflächig anliegt, wobei zumindest die der Stirnseite des vertikalen Profilstabes (1) zugewandte Außenseite des zweiten Profilstabes (2) eine hinterschnittene Längsnut aufweist, während zumindest im vertikal anliegenden Profilstab (1) mindestens eine, in Längsrichtung verlaufende, im Querschnitt mehreckige und im Bereich seiner Stirnseite offene Innenkammer (14) vorgesehen ist und ein ein Zentrierstück (13) aufweisendes Arretierteil (3) in die Innenkammer (14) einführbar und dort form- und/oder kraftschlüssig festlegbar ist, während ein die Längsnut (8) des zweiten Profilstabes (2) hintergreifender Nutstein (4) mit dem Arretierteil (3) verbunden ist, wobei an dem Zentrierstück (13) ein Flansch (5) angeordnet ist, der in Gebrauchsstellung in der Längsnut (8) des zweiten Profilstabes (2) einliegt, dadurch gekennzeichnet, daß die dem Zentrierstück (13) zugewandte Seite des Flansches (5), die sich an der Stirnfläche des ersten Profilstabes (1) abstützt, flacheben mit der zugeordneten Außenfläche des zweiten Profilstabes (2) verläuft, wobei der Flansch (5) sich in seiner Länge ebenso wie der mit ihm in seinen Endbereichen verschraubte Nutstein (4) mindestens über die Stirnfläche des ersten Profilstabes (1) erstreckt und in seiner Breite geringfügig kleiner ist als die Breite der Längsnut (8), die Verschraubungen (11) des Flansches (5) mit dem Nutstein (4) von außen frei zugänglich sind und das Arretierteil (3) eine selbstschneidende, mit dem Zentrierstück (13) verbindbare Mutter (6) aufweist, die in die Innenkammer (14) einschraubbar ist.

2. Verbindung nach Anspruch 1, dadurch gekennzeichnet, daß die Mutter (6) einen auf der dem Zentrierstück (13) abgewandten Seite angeordneten Zentrieransatz (16) aufweist.

3. Verbindung nach Anspruch 1 oder 2, dadurch gekennzeichnet, daß auf der dem Zentrierstück (13) zugewandten Seite der Mutter (6) eine Werkzeugaufnahme, beispielsweise ein Sechskant angeordnet ist.

4. Verbindung nach Anspruch 1, dadurch gekennzeichnet, daß der Flansch (5), bezogen auf die Mittelachse des Arretierteiles (3) symmetrisch ausgebildet ist.

5. Verbindung nach Anspruch 1 oder 4, dadurch gekenn zeichnet, daß der Flansch (5) eine Ausnehmung (15) aufweist.

6. Verbindung nach Anspruch 1, bei der zumindest in den dem Flansch (5) zugewandten Außenseiten des ersten Profilstabes (1), im Bereich seiner Mittelachse jeweils eine Längsnut (9) vorgesehen ist, dadurch gekennzeichnet, daß die Schraubenköpfe der Schrauben (11) innerhalb der Längsnuten (9) angeordnet sind.

7. Verbindung nach Anspruch 1, dadurch gekennzeichnet, daß der Nutstein (4) etwa der Länge des Flansches (5) entspricht.

8. Verbindung nach Anspruch 1, dadurch gekennzeichnet, daß in dem Nutstein (4), etwa mittig angeordnet, ein Spannelement vorgesehen ist, das sich am Nutgrund abstützt.

9. Verbindung nach Anspruch 8, dadurch gekennzeichnet, daß das Spannelement aus einer Spannschraube, beispielsweise aus einer Madenschraube (10) gebildet ist.

10. Verbindung nach Anspruch 8, dadurch gekennzeichnet, daß das Spannelement aus einer druckfederbelasteten Kugel gebildet ist.

**Claims**

1. A releasable connection between two profile bars (1, 2) which are of an angular cross-section, preferably of light metal, of which a first (1) bears with an end face vertically againt a longitudinat side of the second profile bar (2) over the full surface, wherein at least the outside of the second profile bar (2), which is towards the end face of the vertical profile bar (1), has an undercut longitudinal groove while provided at least in the profile bar (1) bearing vertically against the second profile bar is at least one longitudinally extendcing internal chamber (14) which is of a polygonal cross-section and which is open in the region of its end face, and an arresting member (3) having a centering portion (13) can be introduced into the internal chamber (14) where it can be positively and/or forcelockingly fixed while a groove-engaging member (4) which engages behind the longitudinal groove (8) in the second profile bar (2) is cennected to the arresting member (3), wherein arranged on the centering portion (13) is a flange (5) which in the position of use is disposed in the longitudinal groove (8) in the second profile bar (2), characterised in that the side of the flange (5), which is towards the centering portion (13) and which bears against the end surface of the first profile bar (1) extends flush with the associated outside surface of the second profile bar (2), wherein the flange (5) extends in its length, like the groove-engaging member (4) which is screwed thereto in its end regions, at least over the end surface of the first profile bar (1) and is slightly smaller in its width than the width of the longitudinal groove (8), the screw means (11) screwing the flange (5) to the groove-engaging member (4) are freely accessible from the outside and the arresting member (3) has a self-tapping nut (6) which can be connected to the centering portion (13) and which can be screwed into the internal chamber (14).

2. A connecting according to claim 1 characterised in that the nut (6) has a centering projection (16) arranged on the side remote from the centering portion (13).

3. A connection according to claim 1 or claim 2 characterised in that a tool receiving means, for example a hexagon, is arranged on the side of the nut (6) which is towards the centering portion (13).

4. A connection according to claim 1 characterised in that the flange (5) is of a symmetrical configuration with respect to the centre line of the arresting member (3).

5. A connecting according to claim 1 or claim 4 characterised in that the flange (5) has an opening (15).

6. A connection according to claim 1 wherein a respective longitudinal groove (9) is provided at least in the outsides of the first profile bar (1), which are towards the flange (5), in the region of the centre line of the first profile bar, characterised in that the screw heads of the screws (11) are arranged within the longitudinal grooves (9).

7. A connection according to claim 1 characterised in that the groove-engaging member (4) approximately corresponds to the length of the flange (5).

8. A connection according to claim 1 characterised in that provided in the groove-engaging member (4), at a substantially central position, is a clamping element which bears against the floor of the groove.

9. A connection according to claim 8 characterised in that the clamping element is formed from a clamping screw, for example a setscrew (10).

10. A connection according to claim 8 characterised in that the clamping element is formed from a compression spring-loaded ball.

**Revendications**

1. Assemblage démontable de deux baguettes profilées (1, 2) de section polygonale, de préférence en métal léger, dont l'une (1) s'applique verticalement sur toute la surface d'un côté frontal contre un côté longitudinal de la deuxième baguette profilée (2), au moins le côté extérieur de la deuxième baguette profilée (2) qui est tourné vers le côté frontal de la baguette profilée verticale (1) présentant une rainure longitudinale en contre-dépouille, tandis qu'il est prévu, au moins dans la baguette profilée (1) appliqué verticalement, au moins une chambre intérieure (14) s'étendant dans le sens longitudinal, de section polygonale et ouverte dans la région de son côté frontal, et une pièce de blocage (3), présentant un élément centreur (13), pouvant être introduite dans la chambre intérieure, (14) et y être bloquée par complémentarité de forme et/ou par adhérence, tandis qu'une cale de rainure (4), qui s'engage par derrière dans la rainure longitudinale (8) de la deuxième baguette profilée (2), est assemblée à la pièce de blocage (3), une bride (5) étant disposée sur l'élément centreur (3), laquelle repose en position d'utilisation dans la rainure longitudinale (8) de la deuxième baguette profilée (2), caractérisé en ce que le côté de la bride (5) qui est tourné vers l'élément centreur (13), qui s'appuie contre la face frontale de la première baguette profilée (1), s'étend dans le plan de la face extérieure associée de la deuxième baguette profilée (2), la bride (5), dans sa longueur, s'étendant, de même que la cale de rainure (4) qui est vissée à la bride dans ses régions terminales, au moins sur la face frontale de la première baguette profilée (1), et ayant sa largeur, légèrement inférieure à la largeur de la rainure longitudinale (8), les assemblages vissés (11) de la bride (5) avec la cale de rainure (4) sont librement accessibles de l'extérieur, et la pièce de blocage (3) présente un écrou autotaraudeur (6), qui peut être assemblé à l'élément centreur (3) et qui peut être vissé dans la chambre intérieure (14).

2. Assemblage selon la revendication 1, caractérisé en ce que l'écrou (6) présente un élément rapporté de centrage (16) qui est disposé du côté opposé à l'élément centreur (13).

3. Assemblage selon la revendication 1 ou 2, caractérisé en ce qu'un logement d'outil, par exemple à six pans, est disposé sur le côté de l'écrou (6) qui est tourné vers l'élément centreur (13).

4. Assemblage selon la revendication 1, caractérisé en ce que la bride (5) est conformée symétriquement par rapport à l'axe médian de la pièce de blocage (3).

5. Assemblage selon la revendication 1 ou 4, caractérisé en ce que la bride (5) présente un évidement (15).

6. Assemblage selon la revendication 1, selon lequel une rainure longitudinale respective (9) est prévue au moins dans les côtés extérieurs de la première baguette profilée (1) qui sont tournés vers la bride (5), dans la région de l'axe médian de la baguette profilée (1), caractérisé en ce que les têtes des vis (11) sont disposées à l'intérieur des rainures longitudinales (9).

7. Assemblage selon la revendication 1, caractérisé en ce que la cale de rainure (4) est d'une longueur approximativement égale à celle de la bride (5).

8. Assemblage selon la revendication 1, caractérisé en ce qu'il est prévu dans la cale de rainure un élément de serrage, disposé approximativement au centre, qui s'appuie contre le fond de la rainure. 9. Assemblage selon la revendication 8, caractérisé en ce que l'élément de serrage consiste en une vis de serrage, par exemple une vis sans tête (10).

10. Assemblage selon la revendication 8, caractérisé en ce que l'élément de serrage consiste en une bille sollicitée par un ressort de compression.

*Fig.1*

*Fig.2*